# EUROPEAN PATENT APPLICATION

(11) **EP 2 515 598 A1**
(43) Date of publication of application: **24.10.2012**
(21) Application number: 10837651.8
(22) Date of filing: 16.12.2010
(51) Int. Cl.: H04W 72/06, H04W 24/08, H04W 64/00

(54) **CONTROL DEVICE AND MOBILE COMMUNICATION METHOD**

(30) Priority: 16.12.2009 JP 2009285531
(71) Applicant: NTT DOCOMO, INC., Chiyoda-ku Tokyo 100-6150 (JP)
(72) Inventor: HOSONO, Hiroyuki, Tokyo 100-6150 (JP); TSUNEDA, Takayuki, Tokyo 100-6150 (JP); MASUDA, Masafumi, Tokyo 100-6150 (JP); TERAYAMA, Takeshi, Tokyo 100-6150 (JP)
(74) Representative: HOFFMANN EITLE
(86) International application number: PCT/JP2010/072625
(87) International publication number: WO 2011/074626

(57) **Abstract**

A control device 100 of the present invention includes: a holding unit 500 configured to hold a communication-disconnected cell; a selection unit 700 configured to make priority of the communication-disconnected cell lower than priority of the other frequency cells and to select a frequency cell with which a target mobile station 900 is to communicate, when it is determined that the predetermined condition is satisfied; and a notification unit 300 configured to notify the target mobile station 900 of the frequency cell selected by the selection unit 700 and the holding unit 500 is configured to hold the frequency cell notified by the notification unit 300, as the communication-disconnected cell when a control signal from the target mobile station 900 is not received through the frequency cell within a predetermined time period.

## Description

### TECHNICAL FIELD

The present invention relates to a control device and a mobile communication method.

### BACKGROUND ART

A mobile communication network normally uses multiple communication frequencies in a single sector. In each of radio cells (frequency cells) each having sectors and operating frequencies, multiple mobile stations share finite radio resources such as power, code, and time.

When each of the radio cells has a largely different number of mobile stations connected thereto, a communication quality of mobile stations connected to a congested radio cell deteriorates in comparison with a communication quality of mobile stations connected to the other radio cells.

Hence, to prevent mobile stations from connecting to a particular radio cell in a concentrated manner, frequency selection control is conceived which is for quickly and easily selecting a radio cell using an operating frequency having a low congestion degree.

Meanwhile, the mobile communication network includes not only a public base station not limiting mobile stations connecting thereto but also a base station called a home base station (Home NodeB/Home eNodeB) permitting only particular mobile stations to connect thereto, the home base station being installed in a small-scale area such as a home.

There is a problem that introduction of such a home base station into the mobile communication network causes a downlink signal from the home base station to interfere with a downlink signal from an existing public base station regardless of the congestion degree of the radio cells, and thus a communication quality thereof is deteriorated.

As a possible solution of the problem, the following method is conceived. Specifically, each mobile station is made to measure downlink qualities of the other cells before frequency selection control is performed on a mobile communication network side. According to the result of the downlink quality measurement, the frequency selection control is performed in the mobile communication network.

### PRIOR ART DOCUMENTS

### PATENT DOCUMENTS

PATENT DOCUMENT 1: Japanese Patent Application Publication No. 2004-235710
PATENT DOCUMENT 2: Japanese Patent Application Publication No. Hei 8-331637
PATENT DOCUMENT 3: Japanese Patent Application Publication No. 2007-243425

### NON-PATENT DOCUMENT

NON-PATENT DOCUMENT 1: 3GPP TS22.220

### SUMMARY OF THE INVENTION

However, when the mobile station is made to measure the downlink qualities of the other radio cells every time the frequency selection control is performed in the mobile communication network in the mobile communication system, the frequency selection control needs to be performed after the measurement is performed. Thus, there is a problem that a control delay occurs.

Hence, the present invention has been made in view of the aforementioned problem. An object thereof is to provide a control device and a mobile communication method which are capable of performing frequency selection control in consideration of a downlink signal quality in a location of a mobile station without occurrence of a control delay.

The first feature of the present invention is summarized in that a control device including: a holding unit configured to hold a communication-disconnected cell; a determination unit configured to determine whether or not a predetermined condition is satisfied; a selection unit configured to make priority of the communication-disconnected cell lower than priority of the other frequency cells and to select a frequency cell with which a target mobile station is to communicate, when it is determined that the predetermined condition is satisfied; and a notification unit configured to notify the target mobile station of the frequency cell selected by the selection unit, wherein the holding unit is configured to hold the frequency cell notified by the notification unit, as the communication-disconnected cell when a control signal from the target mobile station is not received through the frequency cell within a predetermined time period.

The second feature of the present invention is summarized in that a mobile communication method including: a step A of holding a communication-disconnected cell; a step B of determining whether or not a predetermined condition is satisfied; a step C of making priority of the communication-disconnected cell lower than priority of the other frequency cells and selecting a frequency cell with which a target mobile station is to communicate, when it is determined that the predetermined condition is satisfied; and a step D of notifying the target mobile station of the frequency cell selected in the step C, wherein in the step A, when a control signal from the target mobile station is not received within a predetermined time period through the frequency cell notified in the step D, the frequency cell is held as the communication-disconnected cell.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a radio network controller according to the first embodiment of the present invention.
[Fig. 3] Fig. 3 is a chart showing an example of communication disconnection information managed by the radio network controller according to the first embodiment of the present invention.
[Fig. 4] Fig. 4 is a diagram showing an operation of the mobile communication system according to the first embodiment of the present invention.
[Fig. 5] Fig. 5 is a flowchart showing an operation of the radio network controller according to the first embodiment of the present invention.
[Fig. 6] Fig. 6 is a chart showing an example of communication disconnection information managed by a radio network controller according to a second embodiment of the present invention.
[Fig. 7] Fig. 7 is a flowchart showing an operation of the radio network controller according to the second embodiment of the present invention.

### MODES FOR CARRYING OUT THE INVENTION

### (Mobile Communication System According to First Embodiment of Present Invention)

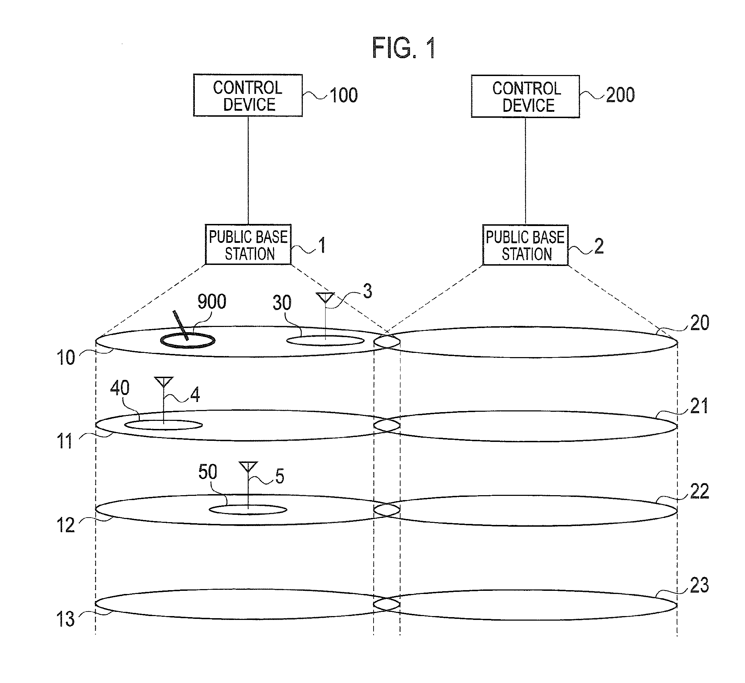

A description is given of a mobile communication system according to a first embodiment of the present invention with reference to Fig. 1 to Fig. 5.

As shown in Fig. 1, in the mobile communication system according to this embodiment, control devices 100 and 200 cover base stations (public base stations 1 and 2 or home base stations 3 to 5) .

In an example of Fig. 1, the control device 100 covers the public base station 1 and the home base stations 3 to 5, while the control device 200 covers the public base station 2.

The public base station 1 covers multiple radio cells (hereinafter, public cells) 10 to 13; the public base station 2 covers multiple public cells 20 to 23; the home base station 3 covers a single radio cell (hereinafter, a home cell) 30; the home base station 4 covers a single home cell 40; and the home base station 5 covers a single home cell 50.

Note that the public cells 10 to 13 and 20 to 23 allow an unspecified number of mobile stations to camp thereon and to perform communication therewith, while the home cells 30 to 50 allow only particular mobile stations (hereinafter, home mobile stations) to camp thereon and to perform communication therewith.

For mobile stations (hereinafter, non-home mobile stations) other than the home mobile stations, signals from the home cells 30 to 50 are sources of interference with public cells communicating with the non-home mobile stations, and lead to deterioration of communication qualities of the non-home mobile stations.

In addition, four operating frequencies #A to #D are utilized in the example in Fig. 1. The radio cells 10, 20, and 30 utilize the operating frequency #A; the radio cells 11, 21, and 40 utilize the operating frequency #B; the radio cells 12, 22, and 50 utilize the operating frequency #C; and the radio cells 13 and 23 utilize the operating frequency #D. Note that omnicells are used for simplicity in the example in Fig. 1.

Meanwhile, a mobile station 900 is a non-home mobile station and camps on the radio cell 10 in the example in Fig. 1.

Note that the present invention is applicable to not only a mobile communication system having a radio access network using a W-CDMA scheme but also a mobile communication system having a radio access network or the like using an LTE (Long Term Evolution) scheme.

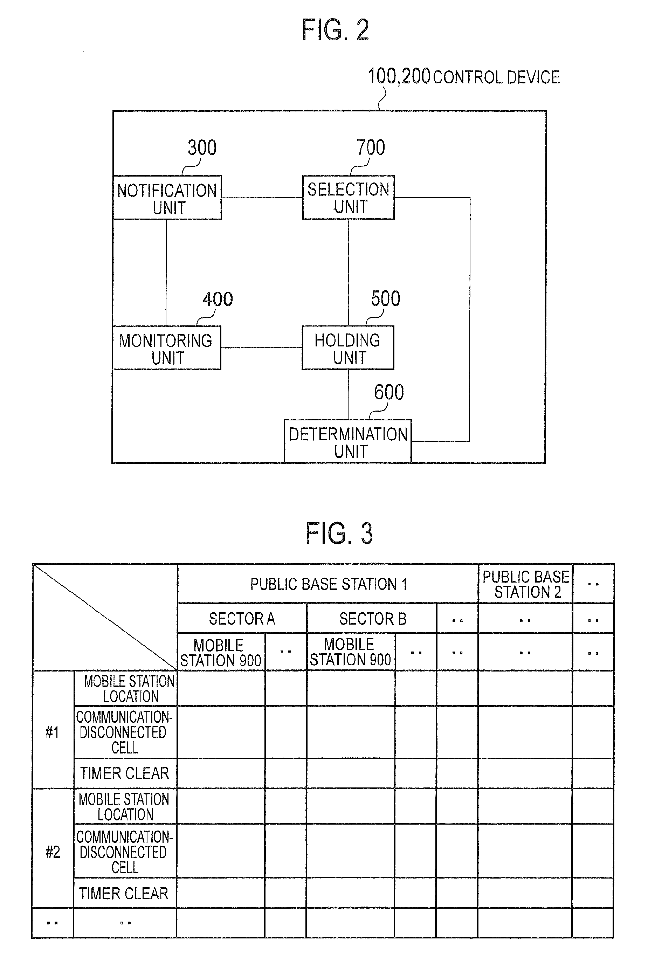

As shown in Fig. 2, the control devices 100 and 200 each include a notification unit 300, a monitoring unit 400, a holding unit 500, a determination unit 600, and a selection unit 700.

Note that in the mobile communication system having the radio access network using the W-CDMA scheme, the control devices 100 and 200 may be provided in a radio network controller RNC or may be provided in another device.

In addition, in the mobile communication system having the radio access network using the LTE scheme, the control devices 100 and 200 may be provided in the public base stations 1 and 2, or may be provided in other devices.

The notification unit 300 is configured to notify a target mobile station of a communication frequency cell selected by the selection unit 700.

Note that the target mobile station is a mobile station on which the aforementioned frequency selection control is to be performed. In addition, the communication frequency cell is a frequency cell with which the target mobile station 900 should communicate.

Note that the notification unit 300 may be configured to notify the target mobile station 900 of, as information for identifying the communication frequency cell, an operating frequency used in a frequency cell selected as the communication frequency cell.

The monitoring unit 400 is configured to monitor reception of a control signal from the target mobile station 900 through the communication frequency cell for a predetermined time period after the notification unit 300 notifies the target mobile station 900 of the communication frequency cell.

Note that the control signal is a control signal transmitted after transition of the target mobile station 900 to the aforementioned communication frequency cell.

As shown in Fig. 3, the holding unit 500 is configured to hold a "mobile station location" and a "communication-disconnected cell" in association with each mobile station and each sector under the public base stations 1 and 2.

Note that the holding unit 500 is configured to hold the communication frequency cell notified to the target mobile station 900 by the notification unit 300, as a "communication-disconnected cell" in association with a combination of a sector to which the communication frequency cell belongs and the mobile station 900 when the reception of the aforementioned control signal is not made sure of within the predetermined time period by the monitoring unit 400.

The holding unit 500 may be configured to further hold, in this case, the location of the target mobile station 900 as a "mobile station location" in association with the combination of a sector to which the communication frequency cell belongs and the mobile station 900.

Note that the holding unit 500 may hold only one combination of the "communication-disconnected cell" and the "mobile station location" or may hold multiple combinations of the "communication-disconnected cell" and the "mobile station location" for each combination of a mobile station and a sector.

The holding unit 500 may be configured, in the case of holding the multiple combinations of the "communication-disconnected cell" and the "mobile station location," to delete a combination of the "communication-disconnected cell" and the "mobile station location" after the elapse of a predetermined time period after the start of the holding of the combination, on the assumption that a home base station might be transferred or a frequency might be changed. The predetermined time period may be defined by a "timer clear" shown in Fig. 3.

The determination unit 600 is configured to determine whether or not a predetermined condition is satisfied.

For example, the determination unit 600 may be configured to determine that the predetermined condition is satisfied when a distance between the "mobile station location" held by the holding unit 500 and a location of the target mobile station 900 is within a predetermined threshold.

The determination unit 600 may be configured to determine that the predetermined condition is satisfied when a sector to which a cell currently connected with the target mobile station 900 belongs is the same as a sector to which a "communication-disconnected cell" held by the holding unit 500 belongs.

The selection unit 700 is configured, when the determination unit 600 determines that the predetermined condition is satisfied, to make priority of the "communication-disconnected cell" held by the holding unit 500 lower than priority of the other frequency cells and to select a communication frequency cell with which the target mobile station 900 should communicate.

In this respect, the selection unit 700 may be configured, when the target mobile station 900 is not the same as a mobile station associated with the "communication-disconnected cell," to make the priority of the communication-disconnected cell lower than the priority of the other frequency cells and to select a communication frequency cell with which the target mobile station 900 should communicate, regardless of whether or not the predetermined condition is satisfied.

In addition, the selection unit 700 may be configured to exclude a "communication-disconnected cell" held by the holding unit 500 from candidates of a communication frequency cell with which the target mobile station 900 should communicate.

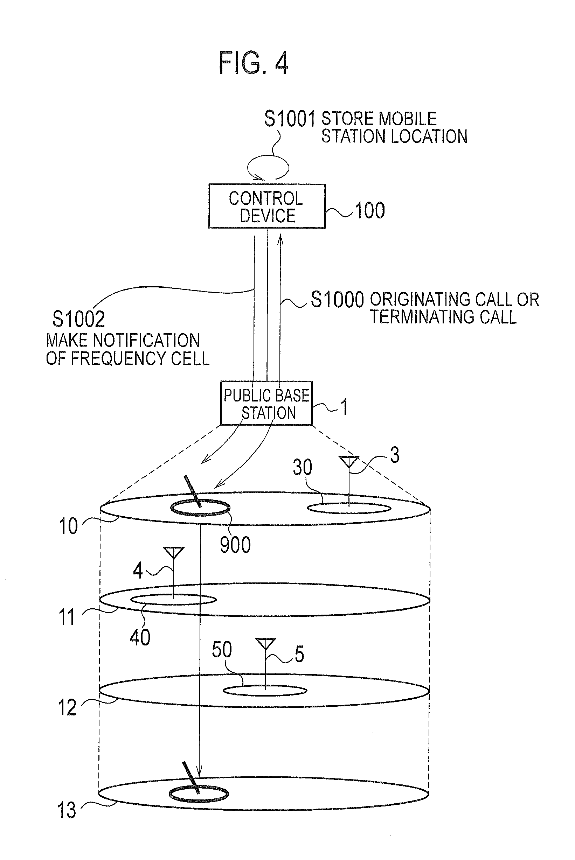

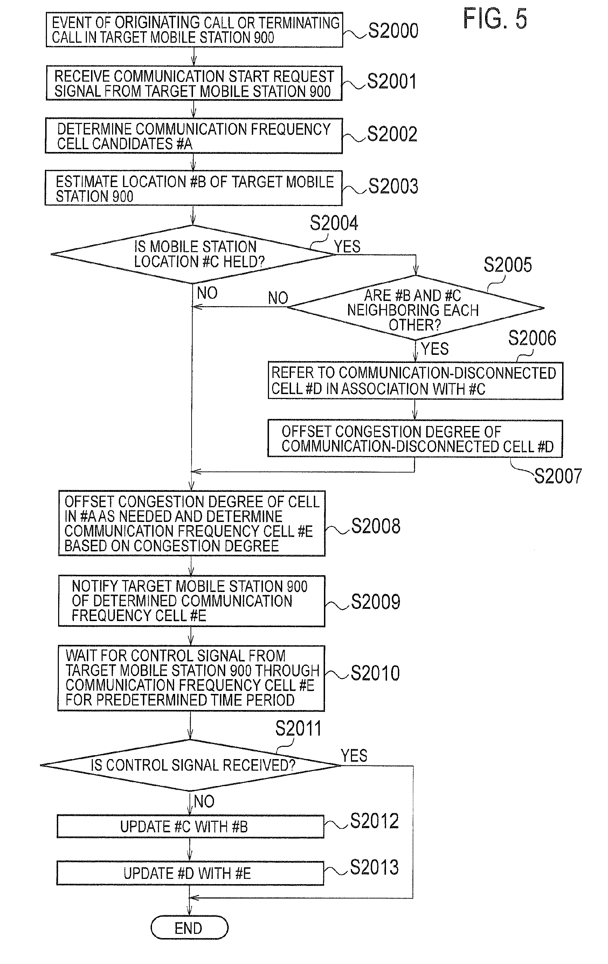

An operation of the mobile communication system according to the first embodiment of the present invention will be described with reference to Figs. 4 and 5.

Firstly, an example of an outlined operation of the control device 100 according to this embodiment will be described with reference to Fig. 4.

As shown in Fig. 4, when starting originating call processing or terminating call processing related to the target mobile station 900 camping on the public cell 10 under the public base station 1 covered by the control device 100 in Step S1000, the control device 100 stores a location of the target mobile station 900 in Step S1001.

In Step S1002, the control device 100 sets the public cells 10 to 13 covering the location of the target mobile station 900 as communication frequency cell candidates, designates such a communication frequency cell that is not subjected to interference from a home cell from among the communication frequency cells, and notifies the target mobile station 900 of the communication frequency cell.

Secondly, an example of a detailed operation of the control device 100 according to this embodiment will be described with reference to Fig. 5.

As shown in Fig. 5, in a case where an originating call event or a terminating call event related to the target mobile station 900 occurs in Step S2000 and where the control device 100 receives a communication start request signal from the target mobile station 900 in Step S2001, the control device 100 determines a radio cell (the public cell 10, for example) originating the communication start request signal and a public cell (public cells 11 to 13, for example) an area of which overlaps with the radio cell, as communication frequency cell candidates #A in Step S2002.

In Step S2003, the control device 100 estimates a location #B of the target mobile station 900 from the communication start request signal received in Step S2001.

For example, the control device 100 may estimate the location #B of the target mobile station 900 based on a radio section delay time measured by the target mobile station 900 and on the radio cell (for example, the public cell 10) originating the communication start request signal, or may estimate that a center position of the radio cell (for example, the public cell 10) originating the communication start request signal is the location #B of the target mobile station 900.

In Step S2004, the control device 100 determines whether or not the holding unit 500 holds a "mobile station location #C" in association with the target mobile station 900.

If it is determined that the "mobile station location #C" is held, the operation proceeds to Step S2005. If it is determined that the "mobile station location #C" is not held, the operation proceeds to Step S2008.

In Step S2005, the control device 100 determines whether or not a distance between the estimated location #B of the target mobile station 900 and the "mobile station location #C" held by the holding unit 500 is within the predetermined distance, that is, whether or not the estimated location #B of the target mobile station 900 and the "mobile station location #C" held by the holding unit 500 have an adjacency relationship.

If the determination of "Yes" is made, the operation proceeds to Step S2006. If the determination of "No" is made, the operation proceeds to Step S2008.

The control device 100 refers to a "communication-disconnected cell #D" in association with the "mobile station location #C" in Step S2006, and offsets the congestion degree of the "communication-disconnected cell #D" in Step S2007.

In Step S2008, the control device 100 refers to the congestion degree of each radio cell included in the communication frequency cell candidates #A, and determines a radio cell having the lowest congestion degree as a communication frequency cell #E for the target mobile station 900.

Here, in a case where Step S2007 has been performed in a process leading to Step S2008, an offset value has been added to the congestion degree of the "communication-disconnected cell #D" in the communication frequency cell candidates #A. Thus, the "communication-disconnected cell #D" has relatively lowered priority in comparison with the radio cells other than the "communication-disconnected cell #D" in the communication frequency cell candidates #A, and is less likely to be selected as the communication frequency cell #E.

Note that the control device 100 may exclude the "communication-disconnected cell #D" from the communication frequency cell candidates #A.

Meanwhile, the description has been given in the example in Fig. 5 by citing a case where the control device 100 selects the communication frequency cell #E based on the congestion degree. The control device 100, however, may determine the communication frequency cell #E by using a criterion other than the congestion degree. Also in the case of determining the communication frequency cell #E by using the criterion other than the congestion degree, the "communication-disconnected cell #D" is required to be given lower priority or to be excluded from the communication frequency cell candidates #A.

In Step S2009, the control device 100 notifies the target mobile station 900 of the communication frequency cell #E determined in Step S2008. In Step S2010, the control device 100 monitors the presence of reception of a control signal from the target mobile station 900 through the communication frequency cell #E, for the predetermined time period.

If the aforementioned control signal is not received within the predetermined time period in Step S2011, in Step S2012 the control device 100 thinks that a home area is installed in the communication frequency cell #E and updates the "mobile station location #C" of the target mobile station 900 with the location #B. In Step S2013, the control device 100 updates the "communication-disconnected cell #D" with the communication frequency cell #E communication with which has just been disconnected.

If the control device 100 receives the aforementioned control signal within the predetermined time period in Step S2011, the operation is terminated.

With the mobile communication system according to the first embodiment of the present invention, even when the home base stations 3 to 5 are introduced into the mobile communication system, a communication frequency cell can be selected to avoid interference with the target mobile station 900 from the home cells 30 to 50.

In addition, with the mobile communication system according to the first embodiment of the present invention, even though the target mobile station 900 is not made to measure communication qualities of the other radio cells in selecting a communication frequency cell, interference avoidance can be achieved without sacrificing a connection delay (a delay between a camping-on state and a communication state).

### (Mobile Communication System According to Second Embodiment of Present Invention)

A description is given of a mobile communication system according to a second embodiment of the present invention. The description is given below of the mobile communication system according to the second embodiment of the present invention, focused on a difference from the aforementioned mobile communication system according to the first embodiment.

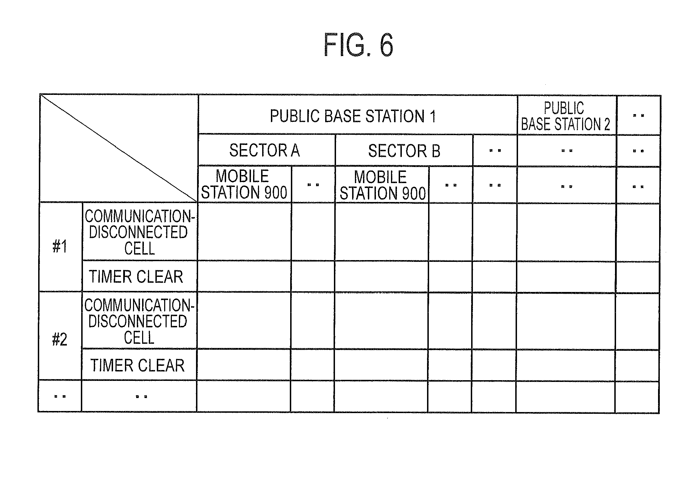

The holding unit 500 is configured to hold a "communication-disconnected cell" for each mobile station and each sector under the public base stations 1 and 2, as shown in Fig. 6.

Note that the holding unit 500 is configured to hold the communication frequency cell notified to the target mobile station 900 by the notification unit 300, as a "communication-disconnected cell" in association with a combination of a sector to which the communication frequency cell belongs and the mobile station 900 when the reception of the aforementioned control signal is not made sure within the predetermined time period by the monitoring unit 400.

Note that the holding unit 500 may hold only one "communication-disconnected cell" or may hold multiple "communication-disconnected cells" for each combination of a mobile station and a sector.

The holding unit 500 may be configured, in the case of holding the multiple "communication-disconnected cells," to delete a "communication-disconnected cell" after the elapse of a predetermined time period after the start of the holding the "communication-disconnected cells," on the assumption that a home base station might be transferred or a frequency might be changed. The predetermined time period may be defined by a "timer clear" shown in Fig. 6.

Meanwhile, the determination unit 600 may be configured to determine that a predetermined condition is satisfied if the predetermined time period has not passed since the holding unit 500 holds the "communication-disconnected cell."

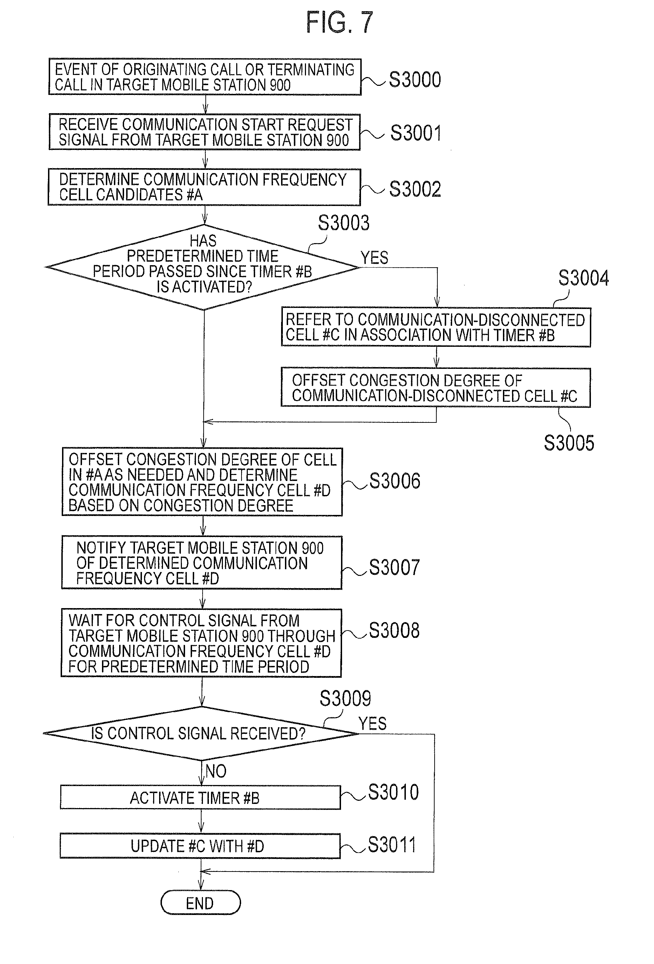

An example of a detailed operation of the control device 100 according to this embodiment will be described below with reference to Fig. 7.

As shown in Fig. 7, in a case where an originating call event or a terminating call event related to the target mobile station 900 occurs in Step S3000 and where the control device 100 receives a communication start request signal from the target mobile station 900 in Step S3001, the control device 100 determines a radio cell (the public cell 10, for example) originating the communication start request signal and a public cell (public cells 11 to 13, for example) an area of which overlaps with the radio cell, as communication frequency cell candidates #A in Step S3002.

In Step S3003, the control device 100 determines whether or not a predetermined time period has passed since a timer #B is activated.

If the determination of "Yes" is made, the operation proceeds to Step S3004. If the determination of "No" is made, the operation proceeds to Step S3006.

The control device 100 refers to a "communication-disconnected cell #C" in association with the timer #B in Step S3004, and offsets the congestion degree of the "communication-disconnected cell #C" in Step S3005.

In Step S3006, the control device 100 refers to the congestion degree of each radio cell included in the communication frequency cell candidates #A, and determines a radio cell having the lowest congestion degree as a communication frequency cell #D for the target mobile station 900.

Here, in a case where Step S3005 has been performed in a process leading to Step S3006, an offset value has been added to the congestion degree of the "communication-disconnected cell #C" in the communication frequency cell candidates #A. Thus, the "communication-disconnected cell #C" has relatively lowered priority in comparison with the radio cells other than the "communication-disconnected cell #C" in the communication frequency cell candidates #A, and is less likely to be selected as the communication frequency cell #D.

Note that the control device 100 may exclude the "communication-disconnected cell #C" from the communication frequency cell candidates #A.

Meanwhile, the description has been given in the example in Fig. 7 by citing a case where the control device 100 selects the communication frequency cell #D based on the congestion degree. The control device 100, however, may determine the communication frequency cell #D by using a criterion other than the congestion degree. Also in the case of determining the communication frequency cell #D by using the criterion other than the congestion degree, the "communication-disconnected cell #C" is required to be given lower priority or to be excluded from the communication frequency cell candidates #A.

In Step S3007, the control device 100 notifies the target mobile station 900 of the communication frequency cell #C determined in Step S3006. In Step S3008, the control device 100 monitors the presence of reception of a control signal from the target mobile station 900 through the communication frequency cell #D, for the predetermined time period.

If the aforementioned control signal is not received within the predetermined time period in Step S3009, in Step S3010 the control device 100 thinks that a home area is installed in the communication frequency cell #D and activates the timer #B. In Step S3011, the control device 100 updates the "communication-disconnected cell #C" with the communication frequency cell #D communication with which has just been disconnected.

If the control device 100 receives the aforementioned control signal within the predetermined time period in Step S3009, the operation is terminated.

Features of this embodiment described above may be expressed as follows.

A first feature of this embodiment is summarized as follows. Control devices 100 and 200 include: a holding unit 500 configured to hold a "communication-disconnected cell;" a determination unit configured to determine whether or not a predetermined condition is satisfied; a selection unit 700 configured to make priority of the "communication-disconnected cell" lower than priority of the other frequency cells and to select a communication frequency cell with which a target mobile station 900 should communicate, when it is determined that the predetermined condition is satisfied; and a notification unit 300 configured to notify the target mobile station 900 of the communication frequency cell selected by the selection unit 700. The holding unit 500 is configured to hold the communication frequency cell notified by the notification unit 300, as the communication-disconnected cell when a control signal from the target mobile station 900 is not received through the communication frequency cell within a predetermined time period.

In the first feature of this embodiment, the holding unit 500 may be configured to hold the communication frequency cell notified by the notification unit 300, as the communication-disconnected cell and to hold a location of the target mobile station 900 as a mobile station location when a control signal from the target mobile station 900 is not received through the communication frequency cell within the predetermined time period. In addition, the determination unit 600 may be configured to determine that the predetermined condition is satisfied when a distance between the mobile station location held by the holding unit 500 and the location of the target mobile station 900 is within a predetermined threshold.

In the first feature of this embodiment, the determination unit 600 may be configured to determine that the predetermined condition is satisfied if the predetermined time period has not passed since the holding unit 500 holds the "communication-disconnected cell."

In the first feature of this embodiment, the holding unit 500 may be configured to hold the communication frequency cell notified by the notification unit 300, as the "communication-disconnected cell" and to hold a sector to which the "communication-disconnected cell" belongs, when a control signal from the target mobile station 900 is not received through the communication frequency cell within the predetermined time period. In addition, the determination unit 600 may be configured to determine that the predetermined condition is satisfied when a sector to which a cell currently connected with the target mobile station 900 belongs is the same as the sector to which the communication-disconnected cell held by the holding unit 500 belongs.

In the first feature of this embodiment, the holding unit 500 may be configured to hold the communication frequency cell notified by the notification unit 300, as the "communication-disconnected cell" and to hold the target mobile station 900 as a mobile station associated with the "communication-disconnected cell" when the control signal from the target mobile station 900 is not received through the communication frequency cell within the predetermined time period. In addition, the selection unit 700 may be configured to make the priority of the "communication-disconnected cell" lower than priority of the other frequency cells and to select the communication frequency cell with which the target mobile station 900 should communicate, regardless of whether or not the predetermined condition is satisfied, when the target mobile station 900 is not the same as the mobile station associated with the "communication-disconnected cell."

In the first feature of this embodiment, the selection unit 700 may be configured to exclude the "communication-disconnected cell" from a candidate of the communication frequency cell with which the target mobile station 900 should communicate.

A second feature of this embodiment is summarized as follows. A mobile communication method includes: a step A of holding a "communication-disconnected cell;" a step B of determining whether or not a predetermined condition is satisfied; a step C of making priority of the "communication-disconnected cell" lower than priority of the other frequency cells and selecting a communication frequency cell with which a target mobile station 900 should communicate, when it is determined that the predetermined condition is satisfied; and a step D of notifying the target mobile station 900 of the communication frequency cell selected in the step C. In the step A, when a control signal from the target mobile station 900 is not received within a predetermined time period through the communication frequency cell notified in the step D, the communication frequency cell is held as the "communication-disconnected cell."

Note that operations of the aforementioned control devices 100 and 200, the public radio base stations 1 and 2, the home base stations 3 to 5, and the mobile station 900 may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk drive, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the control devices 100 and 200, the public radio base stations 1 and 2, the home base stations 3 to 5, and the mobile station 900. Also, the storage medium and the processor may be provided in the control devices 100 and 200, the public radio base stations 1 and 2, the home base stations 3 to 5, and the mobile station 900, as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

Note that the entire content of Japanese Patent Application No. 2009-285531 (filed on December 16, 2009) is incorporated herein by reference.

### INDUSTRIAL APPLICABILITY

The present invention can provide a control device and a mobile communication method which are capable of performing frequency selection control in consideration of a downlink quality in a location of a mobile station without occurrence of a control delay, and thus is useful in radio communications and the like.

### EXPLANATION OF THE REFERENCE NUMERALS

1, 2 ... public base station
3 to 5 ... home base station
10 to 13, 20 to 23 ... public cell
30, 40, 50 ... home cell
100, 200 ... control device
300 ... notification unit
400 ... monitoring unit
500 ... holding unit
600 ... determination unit
700 ... selection unit
900 ... mobile station

## Claims

1. A control device comprising:
a holding unit configured to hold a communication-disconnected cell;
a determination unit configured to determine whether or not a predetermined condition is satisfied;
a selection unit configured to make priority of the communication-disconnected cell lower than priority of the other frequency cells and to select a frequency cell with which a target mobile station is to communicate, when it is determined that the predetermined condition is satisfied; and
a notification unit configured to notify the target mobile station of the frequency cell selected by the selection unit, wherein
the holding unit is configured to hold the frequency cell notified by the notification unit, as the communication-disconnected cell when a control signal from the target mobile station is not received through the frequency cell within a predetermined time period.

2. The control device according to claim 1, wherein
the holding unit is configured to hold the frequency cell notified by the notification unit, as the communication-disconnected cell and to hold a location of the target mobile station as a mobile station location when a control signal from the target mobile station is not received through the frequency cell within the predetermined time period, and
the determination unit is configured to determine that the predetermined condition is satisfied when a distance between the mobile station location held by the holding unit and the location of the target mobile station is within a predetermined threshold.

3. The control device according to claim 1, wherein the determination unit is configured to determine that the predetermined condition is satisfied if the predetermined time period has not passed since the holding unit holds the communication-disconnected cell.

4. The control device according to claim 1, wherein
the holding unit is configured to hold the frequency cell notified by the notification unit, as the communication-disconnected cell and to hold a sector to which the communication-disconnected cell belongs, when a control signal from the target mobile station is not received through the frequency cell within the predetermined time period, and
the determination unit is configured to determine that the predetermined condition is satisfied when a sector to which a cell currently connected with the target mobile station belongs is the same as the sector to which the communication-disconnected cell held by the holding unit belongs.

5. The control device according to claim 1, wherein
the holding unit is configured to hold the frequency cell notified by the notification unit, as the communication-disconnected cell and to hold the target mobile station as a mobile station associated with the communication-disconnected cell when the control signal from the target mobile station is not received through the frequency cell within the predetermined time period, and
the selection unit is configured to make the priority of the communication-disconnected cell lower than priority of the other frequency cells and to select the frequency cell with which the target mobile station is to communicate, regardless of whether or not the predetermined condition is satisfied, when the target mobile station is not the same as the mobile station associated with the communication-disconnected cell.

6. The control device according to claim 1, wherein
the selection unit is configured to exclude the communication-disconnected cell from a candidate of the frequency cell with which the target mobile station is to communicate.

7. A mobile communication method comprising:
a step A of holding a communication-disconnected cell;
a step B of determining whether or not a predetermined condition is satisfied;
a step C of making priority of the communication-disconnected cell lower than priority of the other frequency cells and selecting a frequency cell with which a target mobile station is to communicate, when it is determined that the predetermined condition is satisfied; and
a step D of notifying the target mobile station of the frequency cell selected in the step C, wherein
in the step A, when a control signal from the target mobile station is not received within a predetermined time period through the frequency cell notified in the step D, the frequency cell is held as the communication-disconnected cell.
